# EUROPEAN PATENT SPECIFICATION

(11) **EP 3 001 397 B1**
(45) Date of publication and mention of the grant of the patent: **15.03.2017**
(21) Application number: 15182108.9
(22) Date of filing: 24.08.2015
(51) Int. Cl.: G08C 17/00

(54) **DISPLAY APPARATUS AND SYSTEM FOR PROVIDING UI, AND METHOD FOR PROVIDING UI OF DISPLAY APPARATUS**
ANZEIGEVORRICHTUNG UND SYSTEM ZUR BEREITSTELLUNG EINER BENUTZEROBERFLÄCHE UND VERFAHREN ZUR BEREITSTELLUNG EINER BENUTZEROBERFLÄCHE EINER ANZEIGEVORRICHTUNG
APPAREIL D'AFFICHAGE ET SYSTÈME DE FOURNITURE D'UNE INTERFACE UTILISATEUR ET PROCÉDÉ DE FOURNITURE D'UNE INTERFACE UTILISATEUR D'UN APPAREIL D'AFFICHAGE

(30) Priority: 29.09.2014 KR 20140130556
(43) Date of publication of application: 30.03.2016
(73) Proprietor: Samsung Electronics Co., Ltd., Gyeonggi-do 16677 (KR)
(72) Inventor: JEON, Sung-min, Gyeonggi-do (KR)
(74) Representative: Walaski, Jan Filip

(56) References cited:
- WO-A1-2012/158128
- US-A1- 2011 032 423

## Description

The present invention relates to a display apparatus and a system for providing a user interface (UI), and a method for providing a UI of a display apparatus, and more particularly, to a display apparatus and a system for providing a variable UI screen according to contents of use pattern information of a plurality of electronic devices, and a method for providing a UI of a display apparatus.

In accordance with the development of electronic technology, various types of electronic products have been developed and come into wide use. Particularly, display apparatuses including a variety of communication functions such as cell phones, PCs, notebook PCs, PDAs, tablet PCs, and the like have come into wide use in most households.

Further, as communications capabilities are provided, electronic devices, which did not previously include communications capabilities, Internet-enabled electronic devices and appliances have been released. Therefore, research is being conducted into building a new information and communications infrastructure allowing humans and electronic devices to ubiquitously communicate with each other by connecting all electronic products to each other via a network.

The electronic devices including the above-mentioned communications capabilities may be used to implement a ubiquitous space. The above-mentioned ubiquitous space is a space in which computing devices that perform specific functions are inserted into an environment and an object to make the environment or the object itself intelligent.

However, a specific model for a service provided by implementing the ubiquitous space has not been established, and currently, the service merely provides a level of functionality that includes simply controlling other electronic products by using a mobile device.

In addition, the service only provides states of other electronic products, and a direct control of a user is required to operate the service. Thus, there is a problem with the service because it lacks the ability to intelligently perform functions for the user.

US2011/032423 relates to a home automation system. WO2012/158128 relates to performing pre-operations at a media device.

Exemplary embodiments provide a display apparatus and a system for storing use information of a plurality of electronic devices, generating use pattern information based on the stored use information, and providing a variable user interface (UI) screen based on the use pattern information when an arbitrary event occurs, and a method for providing a UI of a display apparatus.

According to an aspect of the present invention, there is provided a display apparatus according to claim 1. According to another aspect of the present invention, there is provided a method of providing a user interface according to claim 8. Optional features are set out in the dependent claims.

According to an aspect of an exemplary embodiment, a display apparatus includes: a display; a transceiver configured to perform communication with a plurality of electronic devices so as to receive information on usage of the plurality of electronic devices; storage configured to classify and store information on a pattern of usage generated according to the information on the usage of the plurality of electronic devices and information on a time period of the usage of the plurality of electronic devices; and a controller configured to detect the pattern of usage corresponding to an arbitrary event when the arbitrary event occurs and configure a variable user interface (UI) screen to be displayed on the display based on the pattern of usage.

In response to the information on the usage being transmitted more than a preset number of times during a specific time period from a same electronic device of the plurality of electronic devices, the controller may generate information on a pattern of usage of the electronic device based on the information on the usage which is transmitted more than the preset number of times during the specific time period.

The plurality of electronic devices may include a digital door-lock and a home appliance, the information on the pattern of usage may be information about a pattern of usage in which the home appliance is used within a first preset time period from a time that the digital door-lock is opened, and in response to an event in which the home appliance is used within the first preset time period after the digital door-lock is opened, the controller may display the UI screen including advertisement content related to the home appliance on the display.

The home appliance may be a refrigerator, in response to sensing that the refrigerator is opened within the first preset time period after the digital door-lock is opened and a use of a specific zone of the refrigerator, the controller may control to display advertisement content for a product disposed in the zone.

The plurality of electronic devices may include a telephone apparatus, the information on the pattern of usage may be information about the telephone apparatus calling a same contact more than a preset number of times during a specific time period, and wherein, in response to the specific time period arriving, the controller may control to display a UI screen including the contact on the display.

The plurality of electronic devices may include a digital door-lock and a telephone apparatus, the information on the pattern of usage may be information about a pattern in which the display apparatus is turned-on within a first preset time from a time that the digital door-lock is opened, and wherein, in response to an event in which the display apparatus is turned-on within the first preset time after the digital door-lock is opened, the controller may control to display the UI screen including absence information of the telephone apparatus.

The controller may request new information on usage from the plurality of electronic devices and receives the new information on usage so as to be stored in the storage in response to the display apparatus being turned-on.

In response to new information on usage being received from the plurality of electronic devices, the controller may match meta-data of content displayed on the display and the new information on usage so as to be stored in the storage.

According to an aspect of another exemplary embodiment, a system for providing a user interface (UI) includes: a plurality of electronic devices; and a display apparatus configured to receive use information on usage of the plurality of electronic devices, generate information on a pattern of usage based on the information on the usage of the plurality of electronic devices and information on a time period of the usage of the plurality of electronic devices, and classify and store the information on the pattern of usage, wherein the display apparatus displays a variable UI screen according to the information on the pattern of usage corresponding to an arbitrary event and a content of the arbitrary event in response to an occurrence of the arbitrary event.

The plurality of electronic devices may include a digital door-lock and a refrigerator, the information on the pattern of usage may be information about a pattern of usage in which the refrigerator is opened within a first preset time from a time that the digital door-lock is opened, and in response to the refrigerator being opened within the first preset time period after the digital door-lock is opened and a use of a specific zone of the refrigerator being sensed, the display apparatus may display advertisement content for a product disposed in the zone.

The plurality of electronic devices may include a telephone apparatus, the information on the pattern of usage may be information about the telephone apparatus calling a same contact more than a preset number of times during a specific time period, and in response to the specific time period arriving, the display apparatus may display a UI screen including the contact on the display unit.

The plurality of electronic devices may include a digital door-lock and a telephone apparatus, the information on the pattern of usage may be information about a pattern in which the display apparatus is turned-on within a first preset time from a time that the digital door-lock is opened, and wherein, in response to an event in which the display apparatus is turned-on within the first preset time after the digital door-lock is opened, the display apparatus may display the UI screen including absence information of the telephone apparatus.

According to an aspect of another exemplary embodiment, a method for providing a user interface (UI) of a display apparatus includes: performing communication with a plurality of electronic devices so as to receive information on usage of the plurality of electronic devices; classifying and storing information on a pattern of usage generated according to the information on the usage of the plurality of electronic devices and information on a time period of the usage of the plurality of electronic devices; in response to an arbitrary event occurring, detecting the pattern of usage corresponding to the arbitrary event; and configuring and displaying a variable UI screen based on the pattern of usage.

The method may further include, in response to the information on the usage being transmitted more than a preset number of times during a specific time period from a same electronic device of the plurality of electronic devices, generating information on a pattern of usage of the electronic device based on the information on the usage which is transmitted more than the preset number of times during the specific time period.

The plurality of electronic devices may include a digital door-lock and a home appliance, the information on the pattern of usage may be information about a pattern of usage in which the home appliance is used within a first preset time period from a time that the digital door-lock is opened, and wherein, in response to an event in which the home appliance is used within the first preset time period after the digital door-lock is opened, the UI screen may include advertisement content related to the home appliance.

The home appliance may be a refrigerator, and in response to the refrigerator being opened within the first preset time period after the digital door-lock is opened and a use of a specific zone of the refrigerator being sensed, the advertisement content may include content for a product disposed in the zone.

The plurality of electronic devices may include a telephone apparatus, the information on the pattern of usage may be information about the telephone apparatus calling a same contact more than a preset number of times during a specific time period, and in response to the specific time period arriving, a UI screen including the contact may be displayed.

The plurality of electronic devices may include a digital door-lock and a telephone apparatus, the information on the pattern of usage may be information about a pattern in which the display apparatus is turned-on within a first preset time after a time that the digital door-lock is opened, and in response to an event in which the display apparatus is turned-on within the first reset time after the digital door-lock is opened occurs, the UI screen may include absence information of the telephone apparatus.

The method may further include, in response to the display apparatus being turned-on, new information on usage is requested from the plurality of electronic devices and the new information on usage.

The method may further include, in response to new information on usage being received from the plurality of electronic devices, meta-data of content and the new information on the usage may be matched and stored.

According to an aspect of another exemplary embodiment, a method for providing a user interface (UI) is provided. The method includes: receiving information on a usage of a plurality of electronic devices and a time of the usage of the plurality of electronic devices; generating information on a pattern of usage based on the received information; and in response to an event that corresponds to the information on the pattern of usage occurring at a first electronic device of the plurality of electronic devices, displaying a variable UI at a screen of a second electronic device of the plurality of electronic devices based on the pattern of usage.

The generating may include generating the information on the pattern of usage of an electronic device based on information on a usage of the electronic device that occurs more than the preset number of times during a specific time period.

The first electronic device may be an electronic door lock and the second electronic device may include a home appliance, and the information on the pattern of usage may indicate that the home appliance is used within a preset time of unlocking the electronic door lock.

According to various exemplary embodiments as described above, the display apparatus may provide various UI screens to the user according to the use pattern information generated based on the use information related to the plurality of electronic devices, thereby making it possible to improve satisfaction of the user.

The above and/or other aspects of the exemplary embodiments will be more apparent by describing certain exemplary embodiments with reference to the accompanying drawings, in which:
FIG. 1 is a diagram illustrating a system for providing a UI according to an exemplary embodiment;
FIGS. 2A and 2B are block diagrams showing configurations of a display apparatus according to an exemplary embodiment;
FIGS. 3A and 3B are a diagrams illustrating the generation of use pattern information according to an exemplary embodiment;
FIG. 4 is a diagram illustrating a method for configuring a UI screen according to an exemplary embodiment;
FIGS. 5A, 5B and 5C are a diagrams illustrating a method for configuring a UI screen by a telephone apparatus according to an exemplary embodiment;
FIG. 6 is a diagram illustrating a method for configuring a UI screen by an interaction of a plurality of electronic devices according to an exemplary embodiment;
FIG. 7 is a diagram illustrating a method for configuring a UI screen by an air conditioner according to an exemplary embodiment;
FIG. 8 is a diagram illustrating a method for configuring a UI screen by a cleaner according to an exemplary embodiment;
FIG. 9 is a sequence diagram illustrating a process requesting new use information according to an exemplary embodiment;
FIG. 10 is a flowchart illustrating a method for storing use information according to an exemplary embodiment;
FIG. 11 is a flowchart illustrating a method for providing a UI of a display apparatus according to an exemplary embodiment;
FIG. 12 is a sequence diagram illustrating a method for displaying a variable UI screen according to an exemplary embodiment;
FIG. 13 is a diagram illustrating a method for displaying a variable UI screen using a digital door-lock and a refrigerator according to an exemplary embodiment;
FIG. 14 is a diagram illustrating a method for displaying a variable UI screen using a telephone apparatus according to an exemplary embodiment; and
FIG. 15 is a diagram illustrating a method for displaying a variable UI screen using the digital door-lock and the telephone apparatus according to an exemplary embodiment.

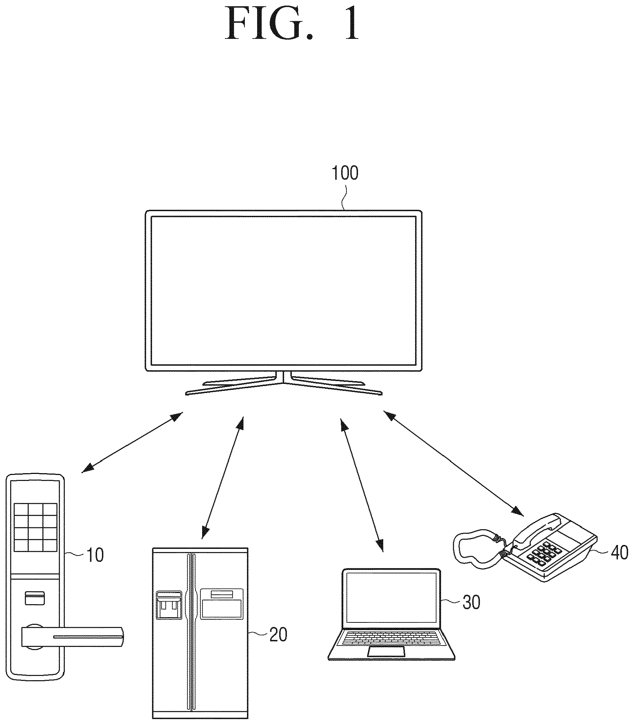

The exemplary embodiments will be described in detail with reference to the accompanying drawings. FIG. 1 is a diagram illustrating a system for providing a UI according to an exemplary embodiment. As shown in FIG. 1, the system for providing the UI includes a display apparatus 100 and a plurality of electronic devices. In this case, the display apparatus 100 may be implemented as a smart TV, but this is merely one example. The display apparatus 100 may be implemented as various electronic devices such as a smart phone, a desktop PC, a tablet PC, a notebook PC, and the like.

The display apparatus 100 may perform communications with the plurality of electronic devices so as to receive use information of each of the plurality of electronic devices. Particularly, the display apparatus 100 may generate use pattern information (e.g., information on a pattern of usage of the electronic devices, information on the types of operations performed by the electronic devices, the time that the operations are performed, and the sequence of the operations, etc.) based on the use information of each of the plurality of electronic devices and may configure and display a variable UI screen for an arbitrary event.

Specifically, the display apparatus 100 may receive use information from each of the plurality of electronic devices. For example, the display apparatus 100 may receive use information that a refrigerator 20 is opened during a time section between 9 PM and 10 PM, or receive use information that a telephone apparatus 40 calls the telephone number of 010-XXXX-XXXX during a time section between 8 PM and 9 PM.

The display apparatus 100 may generate the use pattern information according to the received information and classify and store the generated use pattern information for each of a plurality of time sections. For example, the use information that the refrigerator 20 is opened during the time section between 9 PM and 10 PM is stored and accumulated each time the event occurs, such that the use pattern information is generated. Alternatively, the use pattern information that the telephone apparatus 40 calls the telephone number of 010-XXXX-XXXX during a time section (i.e., time period) between 8 PM and 9 PM may also be generated.

When an arbitrary event occurs, the display apparatus 100 may detect the use pattern information of the time section corresponding to the occurred event. For example, the arbitrary event may be an event entering the time section between 9 PM and 10 PM at 9 PM, and may be an event of turning-on the display apparatus 100 during the time section between 10 PM and 11 PM. If the time at which the arbitrary event occurs is 9:32 PM, the display apparatus 100 may detect the use pattern information of the time section between 9 PM and 10 PM. The use pattern information may be the event in which the refrigerator 20 is opened and the event in which the telephone apparatus 40 calls the same telephone number, as described above. Alternatively, the use pattern information may not be detected because no use pattern information is generated.

The display apparatus 100 may configure and display a variable UI screen according to the contents of the use pattern information. For example, in a case in which the generated use pattern information indicates that the display apparatus 100 is turned-on during the time section between the 9 PM and 10 PM and the refrigerator 20 is opened within a preset time, and the event in which the display apparatus 100 is turned-on during the time section between the 9 PM and 10 PM and the refrigerator 20 is opened within the preset time occurs, the display apparatus 100 may display a UI screen including advertisement contents related to the refrigerator 20. Alternatively, in a case in which the generated use pattern information indicates that the telephone apparatus 40 calls the same telephone number during a specific time section, the display apparatus 100 may display a UI screen including the called telephone number while entering the specific time section.

The plurality of electronic devices may include a digital door-lock 10, the refrigerator 20, a notebook PC 30, and the telephone apparatus 40. However, the plurality of electronic devices are not limited thereto, but may include all communication-enabled electronic devices. The plurality of electronic devices may also be connected to the display apparatus 100 in a wired scheme or a wireless scheme. In addition, the plurality of electronic devices may be directly connected to the display apparatus 100 and may also be connected to the display apparatus 100 through a wireless router, or the like. The plurality of electronic devices may be connected to the display apparatus 100 so as to transmit the use information of a user.

The plurality of electronic devices may immediately transmit the use information of the user to the display apparatus 100 when the user uses the electronic device, and may also store the use information of the user in the electronic device itself when the display apparatus 100 is tuned-off and transmit the use information at a later time, when the display apparatus is turned on, or at predetermined times or intervals. However, this is merely one example, and the use information of the user may also not be stored in the electronic device itself when the display apparatus 100 is turned-off.

When the display apparatus 100 is turned-off or cannot receive the use information, the plurality of electronic devices may store the use information of the user in the electronic device itself. For example, when it is difficult to receive signals because the signals are simultaneously being received from the plurality of electronic devices or a communication function has a temporary problem, in addition to when the display apparatus 100 is turned-off, the plurality of electronic devices may store the use information of the user in the electronic device itself. In this case, if it is assumed that the electronic device is the refrigerator 20, when the user opens a door, the refrigerator 20 may store which door is opened and when the door is opened. Thereafter, when a situation that the display apparatus 100 can receive the use information is made, the display apparatus 100 may request the use information to the plurality of electronic devices. In a case in which the plurality of electronic devices receive the request for use information from the display apparatus 100, the plurality of electronic devices may transmit the stored use information to the display apparatus 100 and may delete the stored use information when the transmission is completed. Hereinafter, a description will be provided based on the assumption that the display apparatus 100 and the plurality of electronic devices are all turned-on and when the use information of the plurality of electronic devices is generated, the use information is immediately transmitted to the display apparatus 100. In addition, the description will be provided based on the assumption that the plurality of electronic devices are connected to the same network as that of the display apparatus 100. However, the plurality of electronic devices may be connected to a different network from that of the display apparatus 100 and may communicate through one or more networks that are connected to each other.

As described above, the display apparatus 100 receives the use information from the plurality of electronic devices so as to generate the use pattern information and displays the UI screen based on the generated use pattern information, thereby improving convenience of the user.

Although the case in which the time section is a unit of one hour has been described in the exemplary embodiment described above, the time section is not limited thereto. For example, the time section may be a predetermined unit of time, e.g., 30 minutes or 2 hours, and the time section may also be set by the user.

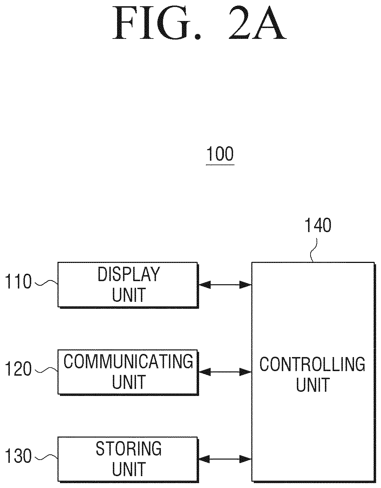

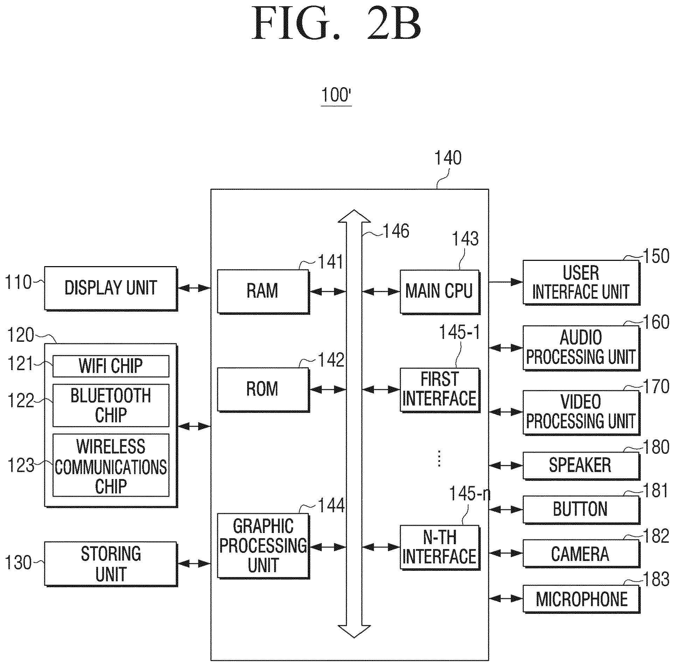

FIGS. 2A and 2B are block diagrams showing a configuration of the display apparatus 100 according to an exemplary embodiment.

Referring to FIG. 2A, the display apparatus 100 includes a display unit 110 (e.g., display, etc.), a communicating unit 120 (e.g. a transceiver, etc.), a storing unit 130 (e.g., a storage, a memory, etc.), and a controlling unit 140 (e.g., a controller, a processor, etc.).

FIG. 2A generally shows a variety of components as a case in which the display apparatus 100 is an apparatus including various functions such as a display function, a communicating function, a storing function, and the like, by way of example. Therefore, depending on exemplary embodiments, some of the components shown in FIG. 2A may be omitted or modified, and other components may be further added.

The display unit 110 displays image data according to a control of the controlling unit 140. Particularly, the display unit 110 may display the variable UI screen according to contents of the use pattern information of the user in addition to general contents information.

In addition, the display unit 110 may be implemented as a liquid crystal display (LCD), organic light emitting diode display (OLED), or the like, but is not limited thereto. In addition, the display unit 110 may also be implemented as a flexible display, a transparent display, or the like, if necessary.

The communicating unit 120 performs communications with the plurality of electronic devices. The communication unit may include one or more of a Wi-Fi chip or module 121, a Bluetooth chip or module 122, and wireless communication chip or module 123, etc.

Specifically, the communicating unit 120 receives the use information from the plurality of electronic devices.

The received use information may be use information and time information of the electronic device of the user. Particularly, the use information of the electronic device of the user may be different depending on features of the respective electronic devices. For example, in a case of the telephone, the use information may be whether or not the user calls, whether or not the user gets the phone, and the telephone number, and in a case of the digital door-lock 10, the use information may be the opened time.

The communicating unit 120 may perform one-way communications or bidirectional communications with the plurality of electronic devices. In a case in which the communicating unit 120 performs the one-way communications, the communicating unit 120 may receive signals from the plurality of electronic devices. In a case in which the communicating unit 120 performs the bidirectional communications, the communicating unit 120 may also receive the signals from the plurality of electronic devices and may also transmit the signal to the plurality of electronic devices.

The storing unit 130 stores various programs and data for driving the display apparatus 100. Particularly, the storing unit 130 may store the use information of the plurality of electronic devices of the user and store the use pattern information generated based on the stored use information.

The controlling unit 140 controls a general operation of the display apparatus 100 according to a user instruction. Particularly, the controlling unit 140 may control the general operation of the display apparatus 100 based on the use pattern information according to the arbitrary event.

Specifically, the controlling unit 140 may control the communicating unit 120 to perform communications with the plurality of electronic devices so as to receive the use information of each of the plurality of electronic devices and may perform a control so that the use pattern information generated according to the received use information is classified for each of the plurality of time sections and is stored in the storing unit 130.

When the arbitrary event occurs, the controlling unit 140 may detect the use pattern information of the time section corresponding to the event from the storing unit 130 and configure the variable UI screen according to the contents of the use pattern information to be displayed on the display unit 110.

In addition, when the use information from the same electronic device among the plurality of electronic devices is transmitted multiple times over a preset number of times, the controlling unit 140 may generate the use pattern information of the electronic device based on the use information which is transmitted multiple times.

Further, the plurality of electronic devices may include the digital door-lock 10 and a home appliance, the use pattern information may be information in which a pattern in which the home appliance is used within a first time which is preset from the open time of the digital door-lock 10 is recorded, and when an event in which the home appliance is used within the first time after the digital door-lock 10 is opened occurs, the controlling unit 140 may display the UI screen including the advertisement contents related to the home appliance.

Further still, in a case in which the home appliance is the refrigerator 20, when the refrigerator 20 is opened within the first time after the digital door-lock 10 is opened and a use fact for a specific zone of the refrigerator 20 is sensed, the controlling unit 140 may display the advertisement contents with respect to the products disposed within the zone.

The plurality of electronic devices may include the telephone apparatus 40, the use pattern information may be information in which history in which the telephone apparatus 40 calls the same contact over the preset number of times during a specific time section is recorded, and the controlling unit 140 may display the UI screen including the contact when the specific time section arrives. The use pattern information may a time, day, month that a contact is called and that pattern may be used to display the UI screen including the contact when the specific time section arrives.

The plurality of electronic devices may include the digital door-lock 10 and the telephone apparatus 40, the use pattern information may be information in which a pattern in which the display apparatus 100 is turned-on within a first time which is preset from the open time of the digital door-lock 10 is recorded, and when an event in which the display apparatus 100 is turned-on within the first time which is preset after the digital door-lock 10 is opened occurs, the controlling unit 140 may display a UI screen including absence information of the telephone apparatus 40. The absence information may indicate calls or messages or other information that was received by the telephone apparatus 40 in the absence of the user or that has not been viewed by the user.

Whenever the display apparatus 100 is turned-on, the controlling unit 140 may request new use information to the plurality of electronic devices, and may receive and store the new use information.

When the new use information is received from the plurality of electronic devices, the controlling unit 140 may match and store meta-data of contents which are displayed and the new use information to each other.

FIG. 2B is a block diagram showing a detailed configuration of a display apparatus 100' according to another exemplary embodiment. Referring to FIG. 2B, the display apparatus 100' includes the display unit 110 (e.g., a display, etc.), the communicating unit 120(e.g., a transceiver, etc.), the storing unit 130 (e.g., a memory, etc.), the controlling unit 140 (e.g., a processor, a controller, etc.), a user interface unit 150 (e.g., a user interface module, a user interface device, etc.), an audio processing unit 160 (e.g., an audio processor, etc.), a video processing unit 170 (e.g., a video processor, etc.), a speaker 180, a button 181, a camera 182, and a microphone 183. A detailed description of the components described above with respect to FIG. 2A among the components shown in FIG. 2B will be omitted.

The controlling unit 140 may generally control an operation of the display apparatus 100 by using a variety of programs stored in the storing unit 130.

Specifically, the controlling unit 140 includes a random access memory (RAM) 141, a read only memory (ROM) 142, a main central processing unit (CPU) 143, a graphic processing unit 144 (e.g., a graphic processor, etc.), first to n-th interfaces 145-1 to 145-n, and a bus 146.

The RAM 141, the ROM 142, the main CPU 143, the graphic processing unit 144, the first to n-th interfaces 145-1 to 145-n, and the like may be connected to each other through the bus 146.

The first to n-th interfaces 145-1 to 145-n are connected to the variety of components described above. One of the interfaces may be a network interface connected to an external device through a network.

The main CPU 143 accesses the storing unit 130 and performs booting using an operating system (O/S) stored in the storing unit 130. In addition, the main CPU 143 performs various operations using a variety of programs stored in the storing unit 130.

The ROM 142 stores a set of instructions for booting a system. When a turn-on instruction is input to supply power, the main CPU 143 copies the O/S stored in the storing unit 130 in the RAM 141 according to the instructions stored in the ROM 142 and executes the O/S so as to boot the system. When the booting is completed, the main CPU 143 copies a variety of application programs stored in the storing unit 130 in the RAM 141 and executes the application programs copied in the RAM 141 so as to perform a variety of operations.

The graphic processing unit 144 generates a screen including various objects such as an icon, an image, a text, and the like using a calculating unit (not shown) and a rendering unit (not shown). The calculating unit (not shown) calculates attribute values such as coordinate values, shapes, sizes, colors, and the like in which the respective objects are to be displayed according to a layout of the screen based on a control instruction which is received. The rendering unit (not shown) generates the screen of various layouts including the objects based on the attribute values calculated by the calculating unit (not shown). The screen generated by the rendering unit (not shown) is displayed in a display region of the display unit 110.

The operations of the controlling unit 140 described above may be performed by the program stored in the storing unit 130.

The storing unit 130 stores various data such as an operating system (O/S) software module for driving the display apparatus 100, a variety of use information, a variety of use pattern information, and the like.

In this case, the controlling unit 140 may display the variable UI screen based on the information stored in the storing unit 130.

The user interface unit 150 receives various user interactions. Here, the user interface unit 150 may be implemented in various shapes according to implementation examples of the display apparatus 100. In a case in which the display apparatus 100 is implemented as a digital TV, the user interface unit 150 may be implemented as a remote controller receiving unit receiving a remote controlling signal from a remote controller, a camera sensing a user motion, a microphone receiving a user voice, and the like. In addition, in a case in which the display apparatus 100 is implemented as a touch based portable terminal, the user interface unit 150 may also be implemented as a touch screen forming a mutual layer structure with a touch pad. In this case, the user interface unit 150 may be used as the display unit 110 described above.

The audio processing unit 160 is a component performing the processing for audio data. The audio processing unit 160 may perform various processes such as decoding, amplification, noise filtration, etc. for the audio data.

The video processing unit 170 is a component performing the processing for video data. The video processing unit 170 may perform various image processes such as decoding, scaling, noise filtration, frame rate conversion, resolution conversion, etc. for the video data.

The speaker 180 is a component outputting a variety of alarm sounds or voice messages as well as a variety of audio data processed by the audio processing unit 160.

The button 181 may be various types of buttons such as a mechanical button, a touch pad, a soft button, a wheel, etc. formed in any region such as a front part, a side part, a rear part, or the like of the exterior of a body of the display apparatus 100.

The camera 182 is configured to photograph a still image or a moving image according to a control of the user. The camera 182 may be implemented by a plurality of cameras such as a front camera and a rear camera. The microphone 183 is configuration for receiving and converting the user voice or other sounds into the audio data.

Hereinafter, a basic configuration and various exemplary embodiments to assist the understanding of the exemplary embodiment will be described.

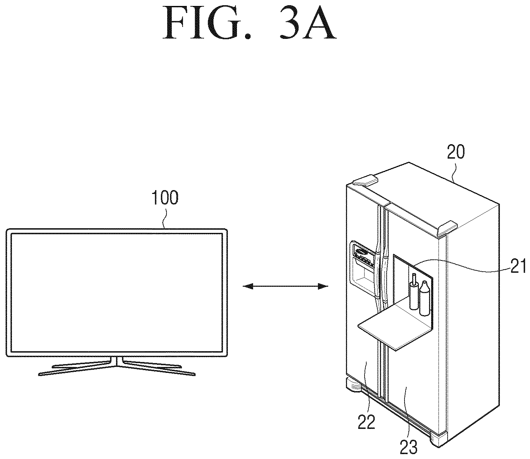

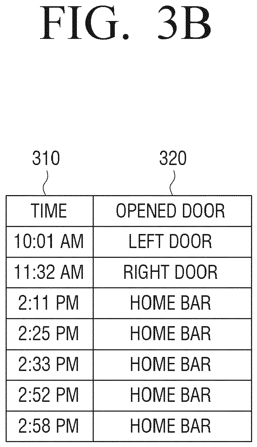

FIGS. 3A and 3B are diagrams illustrating a generation of the use pattern information according to an exemplary embodiment.

FIG. 3A is a diagram illustrating a case in which the refrigerator 20 transmits the use information to the display apparatus 100, according to an exemplary embodiment. The refrigerator 20 includes a home bar 21, a left door 22, and a right door 23, and FIG. 3A shows a state in which the home bar 21 is opened. When the user opens the home bar 21, the refrigerator 20 may transmit a time at which the home bar 21 is opened and the use information in which the home bar 21 is opened to the display apparatus 100.

Alternatively, the refrigerator 20 may transmit the fact that the home bar 21 is opened to the display apparatus 100 in real time, and the display apparatus 100 may store the fact that the home bar 21 is opened, together with a time at which a signal is received based on the signal received from the refrigerator 20. One of the doors of the refrigerator 20 may provide access to freezer.

Although a case in which the refrigerator 20 has three doors is assumed in FIG. 3A, the number of doors is not limited thereto. The refrigerator 20 may have more doors. In addition, the refrigerator 20 may transmit the use information to the display apparatus 100 according to a preset time section while storing the use information.

FIG. 3B is a table illustrating the use information of the refrigerator 20 of the user according to an exemplary embodiment. Referring to FIG. 3B, the use information of the refrigerator 20 during 10:00 AM to 03:00 PM is stored, which may also be stored in the refrigerator 20 itself and may also be stored in the display apparatus 100. However, although the case in which only data over 5 hours is stored is assumed in FIG. 3B, the data is generally stored over a longer time. Hereinafter, a description will be provided under the assumption that the use information is stored in the display apparatus 100.

A first column 310 of Table illustrates a use time of the refrigerator of the user. A second column of Table illustrates detailed use information of the refrigerator and illustrates information of an opened door. In FIG. 3B, it is assumed that the left door 22 is opened one time, the right door 23 is opened one time, and the home bar 21 is opened five times. Particularly, the time at which the home bar is opened is between 02:00 PM and 03:00 PM, and the controlling unit 140 may generate use pattern information by using the above-mentioned use information.

Specifically, when the use information from the same electronic device among the plurality of electronic devices is transmitted multiple times during a specific time section, the controlling unit 140 may generate the use pattern information of the electronic device based on the use information which is transmitted multiple times. For example, when it is assumed that the use information in which the home bar 21 is opened during 02:00 PM to 03:00 PM is received from the refrigerator 20 among the plurality of electronic devices as shown in FIG. 3B and the preset number of times is five, the controlling unit 140 may generate the use pattern information in which the home bar 21 is opened during 02:00 PM to 03:00 PM.

When the above-mentioned use pattern information is generated, the controlling unit 140 may configure and display a variable UI screen based on the use pattern information. For example, when an event in which 02:00 PM arrives occurs and the use pattern information described above is present during the time section from 02:00 PM to 03:00 PM, the controlling unit 140 may configure and display a UI screen including advertisement contents related to beverage in the home bar 21. The UI screen may also include instructions on preparing a meal, a drink, etc. A detailed description thereof will be provided below.

Although the refrigerator 20 has been described by way of example, another exemplary embodiment may be implemented as long as the electronic device is communication-enabled. In addition, in a case of another electronic device, the use information transmitted to the display apparatus 100 may be different information. For example, in a case of the digital door-lock 10, an opened time, information of a case in which a password is incorrectly input, and the like may be transmitted to the display apparatus 100.

Although the case in which one hour from 02:00 PM to 03:00 PM is set as the time section has been described, another time section may be set. For example, when the time section is set in a unit of 30 minutes and the preset number of times of usage for generating use pattern information is five, the use pattern information may not be generated in the case of FIG. 3B. In addition, the preset number of times may be differently set as many as the user may select from a menu provided at the display apparatus or the plurality of electronic devices. In addition, date information and day information may also be additionally stored in the time information.

In addition, although the case in which the use pattern information is generated when the use information is transmitted over the preset number of times has been described, the generation of the use pattern information is not limited thereto. For example, the use pattern information may also be generated at a ratio of the use information to a predetermined term. A configuration in which the use pattern information is generated when the use information is used over five times for a day may also be possible. In this case, the use information is accumulatively stored every day and the number of use information is divided by the number of days from a day at which the use information is initially stored to a current time, such that how many times a day the use information is used may be calculated. A configuration in which the use pattern information is generated when the calculated value is the preset number of times or more may also be possible.

In addition, by providing use pattern information that is not only based the use information, but that is also based on other information and parameters, the UI screen may be provided at more appropriate times with a higher reliability that it will be seen by the user. In a case in which the UI screen is configured and displayed based on all use information without generating the use pattern information, for example, even in the case in which the home bar 21 is opened to drink a beer at 5:00 AM, the above-mentioned record may also be used to configure the UI screen. In addition, the controlling unit 140 may also configure and display the UI screen including advertisement contents related to the beverage in the home bar 21 at 5:00 AM. Therefore, by generating the use pattern information, the UI screen that meets more requirements or that is more relevant to the behavior of the user may be provided.

Hereinafter, a method for configuring the UI screen based on the generated use pattern information will be described in detail.

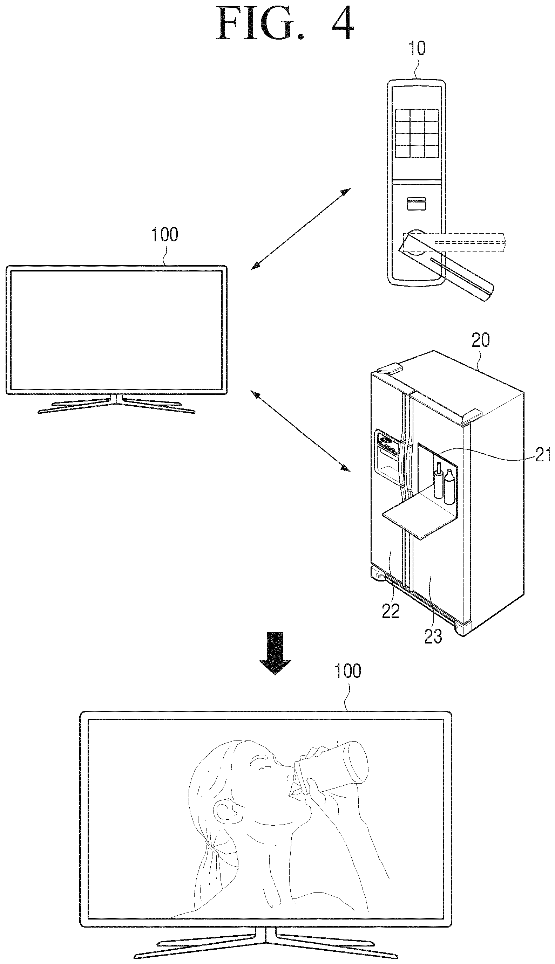

FIG. 4 is a diagram illustrating a method for configuring a UI screen according to an exemplary embodiment.

Referring to FIG. 4, the use pattern information may be pattern information in which the home appliance is used within a preset time after the digital door-lock 10 is opened. Particularly, although it is assumed in FIG. 4 that the used home appliance is the refrigerator 20, a description thereof will be provided below. First, a case in which the home appliance is used will be described.

First, when the digital door-lock 10 is opened, the digital door-lock 10 may transmit a time that the digital door-lock is opened to the display apparatus 100. In addition, if the home appliance is used, the home appliance may transmit the use information to the display apparatus 100. If the use information is transmitted, the controlling unit 140 determines whether or not the home appliance is used between the time at which the digital door-lock 10 is opened and a preset time. As a determination result, if the home appliance is used within the preset time, the controlling unit 140 may display a UI screen including advertisement contents related to the home appliance. The advertisement contents related to the home appliance may also be advertisement contents of the home appliance itself and may also be advertisement contents of products related to the home appliance or products that are stored within the home appliance.

In a case in which the home appliance is the refrigerator 20 as shown in FIG. 4, when the refrigerator 20 is opened within the preset time after the digital door-lock 10 is opened, the controlling unit 140 may sense a use fact for a specific zone of the refrigerator 20. In this case, the controlling unit 140 may display advertisement contents for a product disposed in the used specific zone. In a case in which the product disposed in the specific zone is a beer, the controlling unit 140 may configure and display a beer advertisement in a UI screen.

Although the arbitrary event is described as the arrival of the specific time, FIG. 4 describes the case in which the arbitrary event is based on the use pattern information. That is, the use pattern information may be pattern information in which the home appliance is used within the preset time after the digital door-lock 10 is opened, and a case in which the same use pattern is generated based on the above-mentioned use pattern information may also be the arbitrary event.

In addition, the arbitrary event or the use pattern information may also be generated by an interaction of the plurality of electronic devices. Although the case in which the arbitrary event or the use pattern information is generated by an interaction of the digital door-lock 10 and the refrigerator 20 has been described in FIG. 4, the generation of the arbitrary event or the use pattern information is not limited thereto. For example, in a case in which the telephone apparatus 40 is used within a preset time from a time at which the notebook PC 30 is used, the use pattern information corresponding to the above-mentioned case may be generated or an event may also occur.

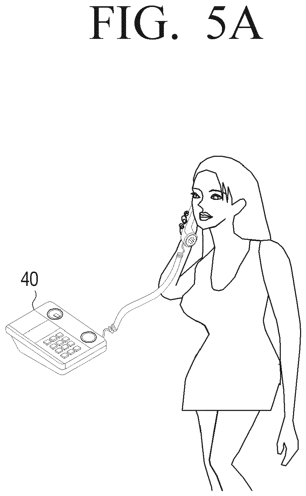

FIGS. 5A - 5C are diagrams illustrating a method for configuring a UI screen by the telephone apparatus 40 according to an exemplary embodiment.

FIG. 5A is a diagram showing a use of the telephone apparatus 40 according to an exemplary embodiment. When the user uses the telephone apparatus 40, the telephone apparatus 40 transmits a use time 510, a kind of use or telephone call 520 (i.e., type of use or telephone call), and a contact 530 to the display apparatus 100. For example, when the user calls the specific telephone number, the telephone apparatus 40 may transmit the use information of September 12, 06:00 PM as the use time 510, "originate" as the kind 520, and 010-AAAA-AAAA as the contact 530 to the display apparatus 100.

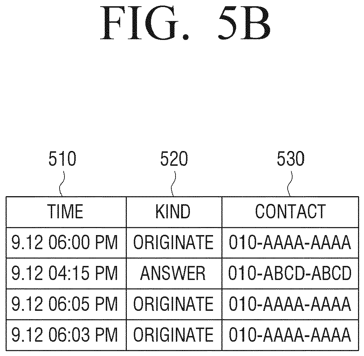

FIG. 5B is a table illustrating the use information of the telephone apparatus 40 according to an exemplary embodiment. The display apparatus 100 may store the use information received from the telephone apparatus 40. The received use information may be the use time 510, the kind 520, and the contact 530, but is not limited thereto. For example, whether the call is a videotelephony or a voice call, a name corresponding to the contact, and the like may be additionally included.

The controlling unit 140 may generate the use pattern information based on the received use information. For example, when the telephone apparatus 40 has a history that the telephone apparatus 40 calls the same contact over the preset number of times during the specific time section, the controlling unit 140 may generate the history as the use pattern information.

In FIG. 5B, the time section is based on 30 minutes and the preset number of times is assumed as three times. In this case, because the call to 010-AAAA-AAAA is three times during the time section of 06:00 PM to 06:30 PM, there is a history that the telephone apparatus 40 calls the same contact over the preset number of times during the specific time section. Therefore, the controlling unit 140 may generate the above-mentioned history as the use pattern information. The generated use pattern information is call information to 010-AAAA-AAAA during the time section of 06:00 PM to 06:30 PM.

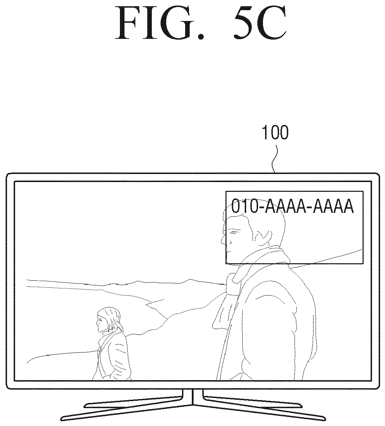

FIG. 5C is a diagram illustrating a UI screen according to an exemplary embodiment. Referring to FIG. 5C, the controlling unit 140 may display the variable UI screen as the arbitrary event occurs. The arbitrary event may be an event entering the specific time section at 06:00 PM.

When the arbitrary event occurs, the controlling unit 140 detects the use pattern information of the time section corresponding to the event. Accordingly, calling information to 010-AAAA-AAAA during the time section of 06:00 PM to 06:30 PM is detected. The controlling unit 140 may display the UI screen including the contact based on the detected use pattern information. The UI screen may be displayed on only a portion of the display unit 110 in order to minimize a watching interruption of the user of the display apparatus 100. The UI screen may also be displayed on the entire display unit 110 in another exemplary embodiment.

Although the case in which only the contact is displayed has been described in the exemplary embodiment described above, the exemplary embodiment is not limited thereto. For example, when the contact which is called over the preset number of times in the use pattern information corresponds to a contact of a family, contacts of all families may be displayed on the UI screen, and when the contact which is called over the preset number of times in the use pattern information corresponds to a contact of a delivery company, contacts of the related delivery companies may be displayed.

In addition, although the case in which the use time of the telephone apparatus 40 is stored as the use information has been described in the exemplary embodiment described above, the exemplary embodiment is not limited thereto. For example, the time section corresponding to the use time of the telephone apparatus 40 may also be stored.

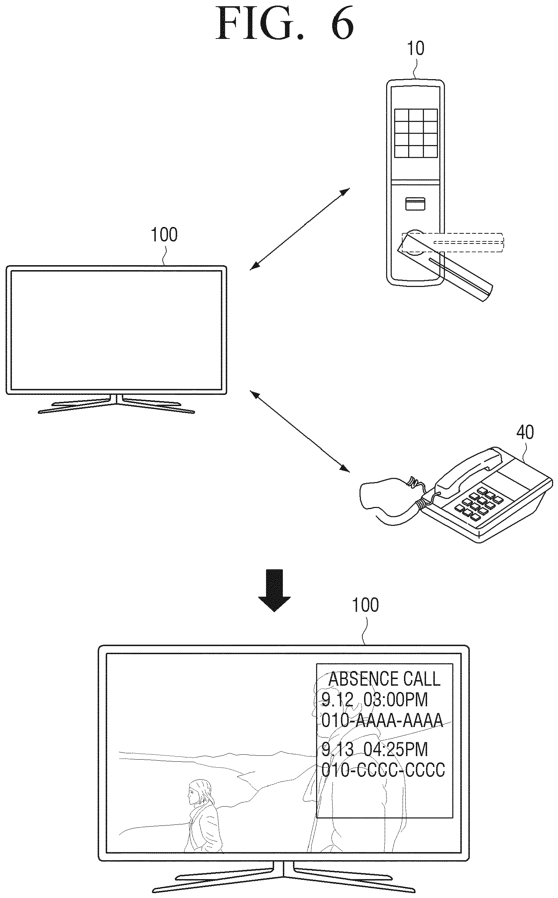

FIG. 6 is a diagram illustrating a method for configuring a UI screen by an interaction of a plurality of electronic devices according to an exemplary embodiment.

Referring to FIG. 6, the system for providing the UI may include the digital door-lock 10 and the telephone apparatus 40 as the plurality of electronic devices, in addition to the display apparatus 100. When the digital door-lock 10 is opened, the use information according to the open of the digital door-lock 10 is transmitted to the display apparatus 100. However, if the display apparatus 100 does not receive the use information because the display apparatus 100 is turned-off or has a problem in communications, the digital door-lock 10 may store the use information. Hereinafter, a description will be provided under an assumption that the display apparatus 100 is turned-off.

Subsequently, if the display apparatus 100 is turned-on, the display apparatus 100 may request the use information to the plurality of electronic devices and receive the use information from the plurality of electronic devices, as described above. The digital door-lock 10 may transmit the stored use information to the display apparatus 100 according to the use information request of the display apparatus 100. In addition, the telephone apparatus 40 may store absence information during a section in which the display apparatus 100 is turned-off and may then transmit the absence information to the display apparatus 100.

The display apparatus 100 may determine whether or not a section between a time at which the digital door-lock 10 is opened and a time at which the display apparatus 100 is turned-on is within a preset time, and may store use information in which the display apparatus 100 and the digital door-lock 10 are associated with each other when the section between the time at which the digital door-lock 10 is opened and the time at which the display apparatus 100 is turned-on is within the preset time. Specifically, the use information of the digital door-lock 10 and the use information of the display apparatus 100, not the use information of only the digital door-lock 10 may be associated with each other so as to be stored. In addition, when the use information described above is stored over a preset number of times, the controlling unit 140 may generate the use pattern information.

When an event in which the display apparatus 100 is turned-on within the preset time after the digital door-lock 10 is opened occurs, the controlling unit 140 may detect the use pattern information and may configure and display the UI screen based on the detected use pattern information. For example, as the event described above occurs, the controlling unit 140 may display the UI screen including the absence information received from the telephone apparatus 40.

Although the case in which the contact and a time at which the call arrives are indicated as the absence information has been illustrated, the exemplary embodiment is not limited thereto. For example, a name corresponding to the contact, or the like may be additionally indicated.

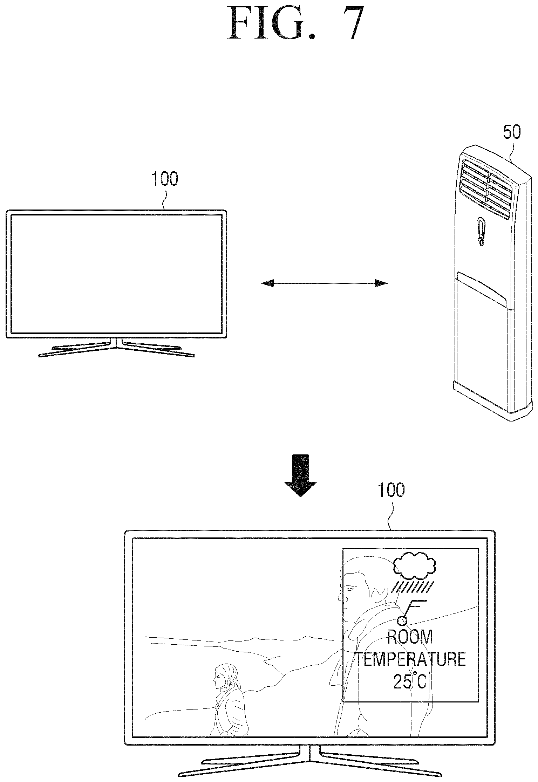

FIG. 7 is a diagram illustrating a method for configuring a UI screen by an air conditioner 50 according to an exemplary embodiment.

Referring to FIG. 7, when the user uses the air conditioner 50, the air conditioner 50 may transmit a used time or a time of usage, current environment information, setting information, and the like to the display apparatus 100. Alternatively, the air conditioner 50 may transmit the use information to the display apparatus 100 according to a preset time section while storing the use information. Accordingly, the controlling unit 140 may generate use pattern information on the air conditioner 50. Since the contents related to the generation of the use pattern information have been described above, a description thereof will be omitted.

When it is assumed that the use pattern information is the use pattern information that the air conditioner 50 is used during a time section between 02:00 PM and 03:00 PM, the controlling unit 140 may configure and display the variable UI screen based on the use pattern information. For example, when an event in which 02:00 PM arrives occurs and the use pattern information described above is present during the time section from 02:00 PM to 03:00 PM, the controlling unit 140 may display a UI screen including the setting information and the environment information of the air conditioner 50. The environment information may include weather, a wind direction, wind speed, and the like. The user uses the air conditioner through the variable UI screen provided by the display apparatus 100. In addition, the display apparatus 100 may also provide a UI capable of controlling the air conditioner 50 through a remote controller, together with the UI screen.

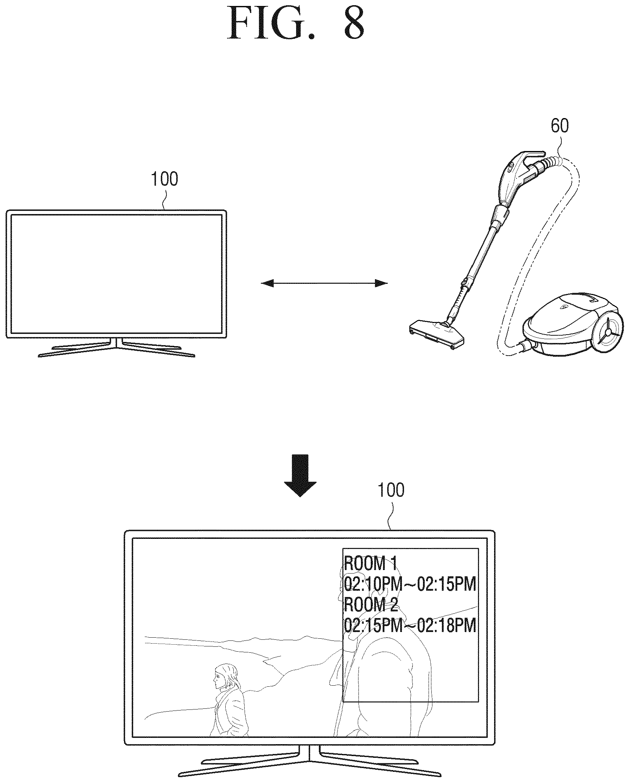

FIG. 8 is a diagram illustrating a method for configuring a UI screen by a cleaner 60 according to an exemplary embodiment.

Referring to FIG. 8, when the user uses the cleaner 60, the cleaner 60 may transmit a used time, a used place (i.e., a place of usage, a room of usage, etc.), and the like to the display apparatus 100. Alternatively, the cleaner 60 may transmit the use information to the display apparatus 100 according to a preset time section while storing the use information. Accordingly, the controlling unit 140 may generate use pattern information on the cleaner 60. Since the contents related to the generation of the use pattern information have been described above, a description thereof will be omitted. The cleaner 60 may be a vacuum cleaner, electronic mop, or other cleaning device or product.

When it is assumed that the use pattern information is the use pattern information that the cleaner 60 is used during a time section between 02:10 PM and 02:18 PM, the controlling unit 140 may configure and display the variable UI screen based on the use pattern information. For example, if it is assumed that the time section is a unit of one hour, when an event in which 02:00 PM arrives occurs and the use pattern information described above is present during the time section from 02:00 PM to 03:00 PM, the controlling unit 140 may display a UI screen including the used time, the used place, and the like of the cleaner 60. The user uses the cleaner 60 through the variable UI screen provided by the display apparatus 100.

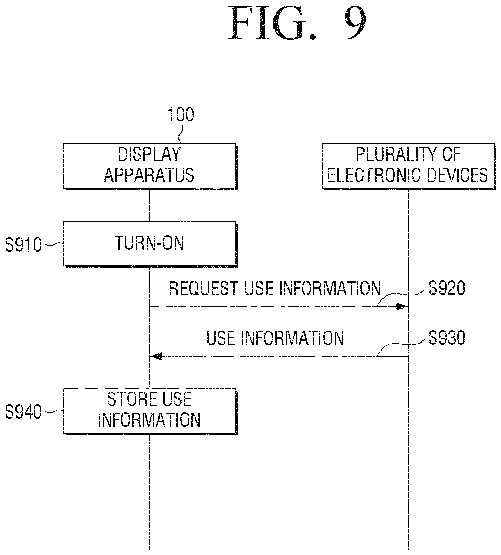

FIG. 9 is a sequence diagram illustrating a process requesting new use information according to an exemplary embodiment.

Referring to FIG. 9, when the display apparatus 100 is turned-on (operation S910), the controlling unit 140 requests the use information to the plurality of electronic devices (operation S920). The plurality of electronic devices are the electronic devices on the same network as the display apparatus 100.

When the plurality of electronic devices receive the use information request from the display apparatus 100, the plurality of electronic devices transmit the use information, which was stored while the display apparatus 100 was turned-off, to the display apparatus 100 (operation S930). However, the electronic device which does not have a storing function among the plurality of electronic devices may not transmit the use information. In addition, the use information may be different depending on the respective electronic devices.

The display apparatus 100 receives and stores the use information from the plurality of electronic devices (operation S940). The new use information may be accumulatively stored with the use information which is previously stored. For example, in a case in which use information is an average of five times per week during an Internet use time of a notebook PC of 09:00 PM to 09:30 PM is stored, if the same use information is newly received, the controlling unit 140 may change the use information to an average of six times per week during the Internet use time of the notebook PC of 09:00 PM to 09:30 PM.

In FIG. 9, it is assumed that the display apparatus 100 does not receive the use information from the plurality of electronic devices during the time section in which the display apparatus 100 is turned-off, but the exemplary embodiment is not limited thereto. For example, if the display apparatus 100 is supplied with power, the display apparatus 100 may also receive the use information from the plurality of electronic devices even though the display apparatus 100 is turned-off.

In addition, when the display apparatus 100 receives the use information from the plurality of electronic devices, the display apparatus 100 may transmit a signal informing that the use information is received to the plurality of electronic devices. When the use information occurs, the plurality of electronic devices immediately transmit the use information to the display apparatus 100, but if there is no a response to the transmission of the use information, the use information may be stored in each of the plurality of electronic devices. On the other hand, when the plurality of electronic devices receive the signal informing that the use information is received from the display apparatus 100, the plurality of electronic devices may delete the transmitted use information.

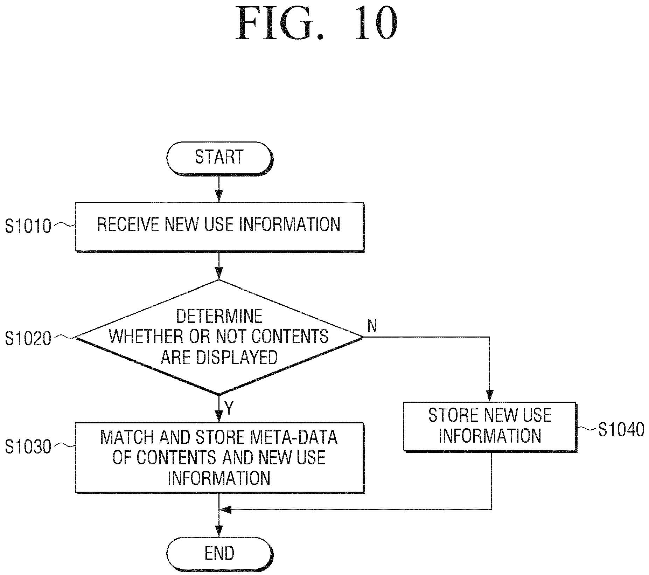

FIG. 10 is a diagram illustrating a method for storing use information according to an exemplary embodiment.

Referring to FIG. 10, the display apparatus 100 receives the new use information from the plurality of electronic devices (operation S1010). In addition, when the new use information is received, it is determined whether or not the display apparatus 100 displays the contents upon receiving the new use information (operation S1020). When the display apparatus 100 does not display the contents or is simply in a waiting screen state, the controlling unit 140 stores the received new use information (operation S1040).

On the other hand, when the new use information is received, if the display apparatus 100 displays specific contents, the controlling unit 140 matches and stores meta-data of the specific contents and the received new use information (operation S1030). For example, when the use information that the home bar 21 is opened is received from the refrigerator 20 together with the use time and the display apparatus 100 displays movie contents, the controlling unit 140 may match and store the meta-data such as a genre, resolution, and the like of the displayed movie contents and the use information that the home bar 21 of the refrigerator 20 is opened. The display apparatus may store the matched contents in association with each other so that the display apparatus may use the associated information to provide a UI screen related to the operation of the refrigerator at the display device. The matched contents may also be used to provide a UI screen related to the content being displayed on the display device on the refrigerator.

In addition, when the same use information is stored over a preset number of times, the controlling unit 140 may generate the use pattern information. Accordingly, when an event in which the home bar 21 of the refrigerator 20 is opened during a specific time section occurs, the controlling unit 140 may display a UI screen providing related contents based on the matched and stored meta-data. For example, when the genre among the matched and stored meta-data is a horror movie genre, the controlling unit 140 may provide a UI screen on which a list of contents corresponding to the horror movie genre is indicated in an order of latest updates to the user.

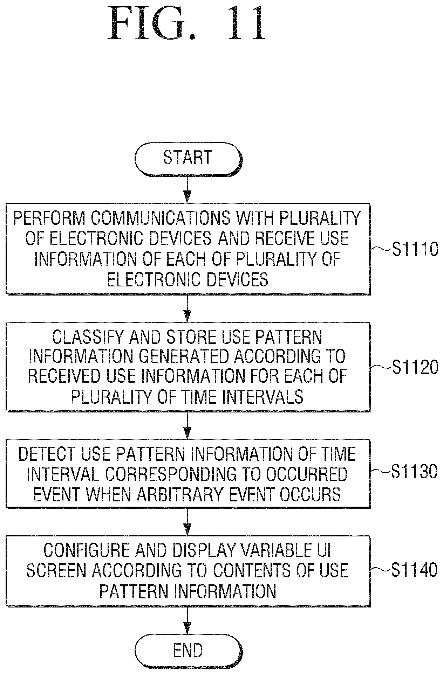

FIG. 11 is a diagram illustrating a method for providing a UI of the display apparatus 100 according to an exemplary embodiment.

Referring to FIG. 11, the display apparatus 100 performs communications with the plurality of electronic devices so as to receive use information of each of the plurality of electronic devices (operation S1110). In addition, the display apparatus 100 classifies and stores use pattern information generated according to the use information for each of a plurality of time sections (operation S1120). The plurality of time sections may also be preset by a manufacturer and may also be set by the user. In addition, the plurality of time sections may be different for each of the plurality of electronic devices.

When the arbitrary event occurs, the use pattern information of the time section corresponding to the event is detected (operation S1130). If the use pattern information is not present, the display apparatus 100 may not display the UI screen. In addition, the display apparatus 100 configures and displays the variable UI screen depending on the contents of the use pattern information (operation S1140). The variable UI screen may be displayed in response to the arbitrary event.

When the use information from the same electronic device among the plurality of electronic devices is transmitted multiple times during a specific time section, the display apparatus 100 may generate the use pattern information of the electronic device based on the use information which is transmitted multiple times.

The plurality of electronic devices may include the digital door-lock 10 and a home appliance and the use pattern information may be information in which a pattern in which the home appliance is used from the open time of the digital door-lock 10 to a first time which is preset is recorded. When an event in which the home appliance is used within the first time after the digital door-lock 10 is opened occurs, in operation S1140 of configuring and displaying the UI screen, the UI screen including the advertisement contents related to the home appliance may be displayed.

In a case in which the home appliance is the refrigerator 20, when the refrigerator 20 is opened within the first time after the digital door-lock 10 is opened and a use fact for a specific zone of the refrigerator 20 is sensed, in operation S1140 of configuring and displaying the UI screen, the advertisement contents with respect to the products disposed within the zone may be displayed.

In addition, the plurality of electronic devices may include the telephone apparatus 40 and the use pattern information may be information in which history in which the telephone apparatus 40 calls the same contact over the preset number of times during a specific time section is recorded. In this case, in operation S1140 of configuring and displaying the UI screen, the UI screen including the contact when the specific time section arrives may be displayed.

In addition, the plurality of electronic devices may include the digital door-lock 10 and the telephone apparatus 40 and the use pattern information may be information in which a pattern in which the display apparatus 100 is turned-on within a first time which is preset from the open time of the digital door-lock 10 is recorded. In this case, when an event in which the display apparatus 100 is turned-on within the first time which is preset after the digital door-lock 10 is opened occurs, in operation S1140 of configuring and displaying the UI screen, a UI screen including absence information of the telephone apparatus 40 may be displayed.

In addition, whenever the display apparatus 100 is turned-on, in the operation of storing the use pattern information, new use information may be requested from the plurality of electronic devices, and the new use information may be received and stored.

In addition, in the operation of storing the use pattern information, when the new use information is received from the plurality of electronic devices, meta-data of contents which are displayed and the new use information may be matched to each other and stored.

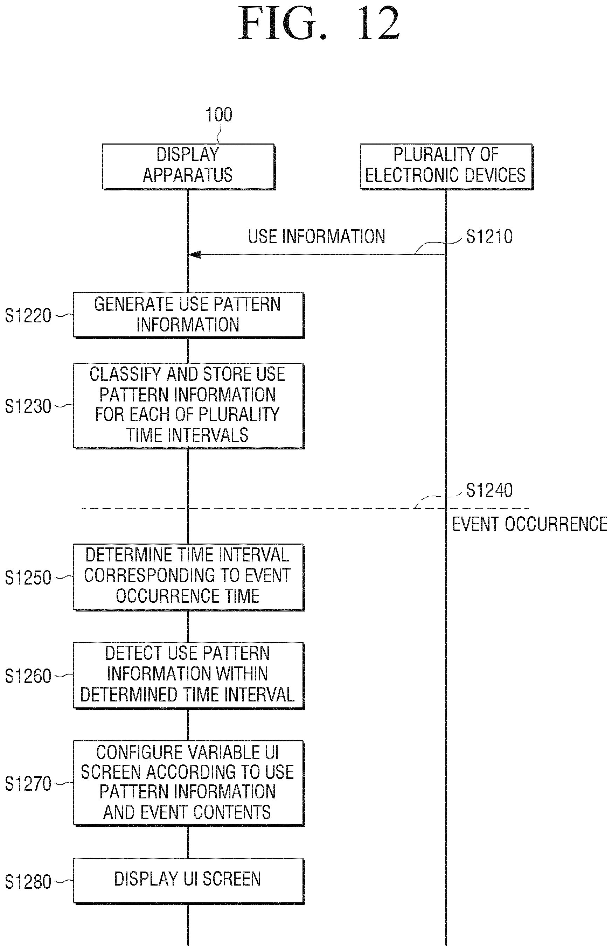

FIG. 12 is a sequence diagram illustrating a method for displaying a variable UI screen according to an exemplary embodiment.

The plurality of electronic devices transmit the use information of the electronic devices to the display apparatus 100 (operation S1210). The plurality of electronic devices may also transmit the use information as soon as the user uses the electronic devices, and may also transmit the use information when the preset time arrives while storing the use information in the electronic devices.

The display apparatus 100 generates use pattern information based on the received use information (operation S1220). The use pattern information may be generated when the same use information is received over the preset number of times for each of the electronic devices. Here, the preset number of times may be set by the user.

In addition, the display apparatus 100 classifies and stores the generated use pattern information for each of a plurality of time sections (operation S1230). The plurality of time sections may have a unit of one hour or a unit of two hours, but are not limited thereto. For example, the time section may be classified in a unit of minutes, the time section may be set by the user, and intervals between the time sections may also be all different.

The display apparatus 100 may sense an occurrence of a specific event while storing the use pattern information (operation S1240). A specific display apparatus 100 may directly sense the occurrence of the event, but the plurality of electronic devices may sense the event and the display apparatus 100 may also receive a signal informing that the event has occurred, from the plurality of electronic devices.

The event may be an entrance to a specific time section, and in this case, the display apparatus 100 may directly sense the occurrence of the event. In addition, the event may occur due to the use of the plurality of electronic devices. For example, the event may be an event in which the refrigerator is opened within a preset time after the digital door-lock is opened. In this case, the display apparatus 100 may sense that the event has occurred by receiving the use information that the refrigerator is opened, from the refrigerator.

When the event occurs, the display apparatus 100 determines a time section corresponding to an event occurrence time (operation S1250). In addition, the display apparatus 100 detects the use pattern information within the determined time section (S1260). If the use pattern information is not detected, the display apparatus 100 may not perform an operation corresponding to the event occurrence.

If the use pattern information is detected, the display apparatus 100 configures a variable UI screen according to the use pattern information and the event contents (operation S1270) and displays the configured UI screen (operation S1280). The variable UI screen may be a UI screen including information related to the electronic device.

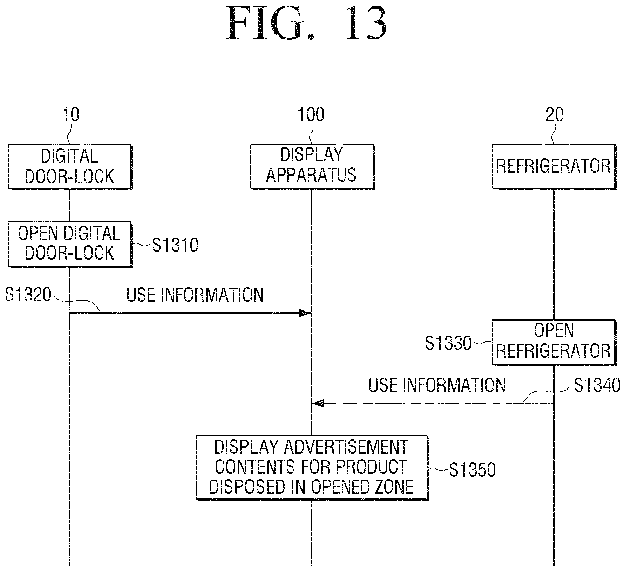

FIGS. 13 to 15 are diagrams illustrating the method for displaying the variable UI screen of FIG. 12 in more detail. Therefore, a description of operations described above with respect to FIG. 12 will be omitted.

FIG. 13 is a diagram illustrating a method for displaying a variable UI screen using the digital door-lock 10 and the refrigerator 20 according to an exemplary embodiment.

Referring to FIG. 13, when the digital door-lock 10 is opened (operation S1310), the digital door-lock 10 transmits information that the digital door-lock 10 is opened and time information to the display apparatus 100 as the use information (operation S1320).

In addition, when the refrigerator 20 is opened (operation S1330), the refrigerator 20 transmits information that which door of the refrigerator is opened and time information to the display apparatus 100 as the use information (operation S1340).

The display apparatus 100 detects whether or not the use pattern information is present based on the received use information. Particularly, if the time at which the refrigerator 20 is opened from the time at which the digital door-lock 10 is opened within the preset time, the display apparatus 100 detects the use pattern information related to those described above.

If the use pattern information described above is present, the display apparatus 100 displays advertisement contents for a product disposed in a zone of the opened door based on information of the opened door of the refrigerator (operation S1350). For example, when the opened door is a door of a freezer and a frozen meal, a frozen pizza, and the like are disposed in the freezer, the display apparatus 100 may provide advertisement contents for the products disposed in the freezer among the advertisement contents which may be provided to the user. However, the advertisement contents are not limited thereto, but advertisement contents for any one product may be randomly displayed.

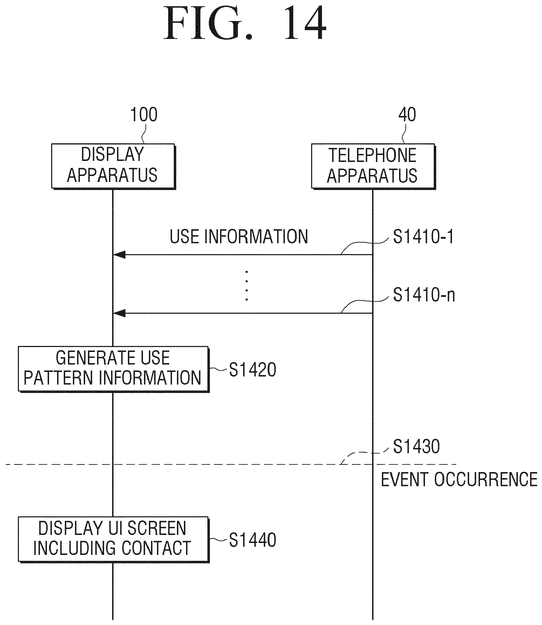

FIG. 14 is a diagram illustrating a method for displaying a variable UI screen using the telephone apparatus 40 according to an exemplary embodiment.

The telephone apparatus 40 transmits the use information to the display apparatus 100 (operation S1410-1 to operation S1410-n). For example, the use information may be information that the user calls a specific number using the telephone apparatus 40 or information received from the specific number.

Accordingly, the display apparatus 100 generates the use pattern information (operation S1420). Although not shown in FIG. 14, the use pattern information may be generated for each of the time sections. For example, when the user repeatedly performs a call that orders a delivery dish during a time section of 09:00 PM to 10:00 PM, the use pattern information may be generated based on the use information described above.

In addition, when a specific event occurs (operation S1430), the display apparatus 100 displays a UI screen including the contact (operation S1440). As described above, the specific event may be an event entering the time section. For example, at 09:00 PM, the display apparatus 100 may display a UI screen including the contact of the delivery dish which is repeatedly called, or may also display a UI screen additionally including the contact of another delivery dish as well as the called contact of the delivery dish.

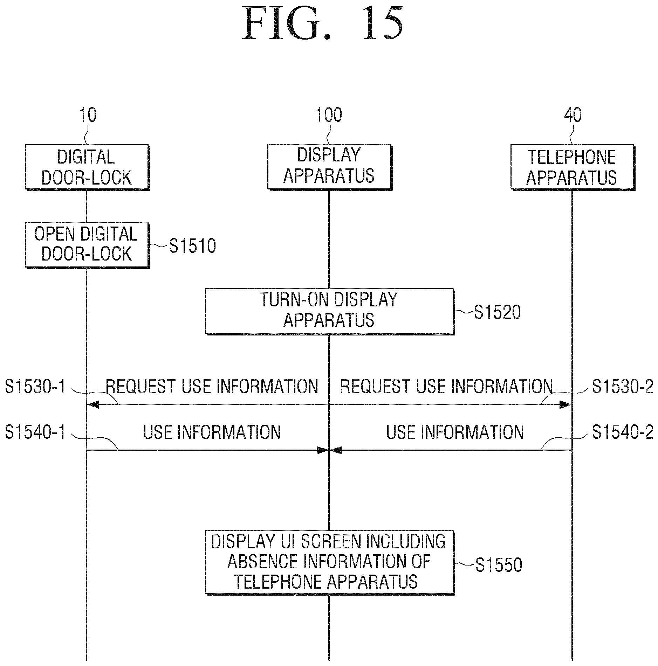

FIG. 15 is a diagram illustrating a method for displaying a variable UI screen using the digital door-lock 10 and the telephone apparatus 40 according to an exemplary embodiment.

Referring to FIG. 15, first, the digital door-lock 10 is opened (operation S1510). In addition, the display apparatus 100 is turned-on (operation S1520). If the display apparatus 100 is turned-on, the display apparatus 100 requests the use information from the digital door-lock 10 and the telephone apparatus 40 (operation S1530-1 and operation S1530-2). Although the case in which the display apparatus 100 requests the use information when being turned-on has been described in FIG. 15, the display apparatus 100 may receive the use information from the plurality of electronic devices after the display apparatus 100 is supplied with power, the use information indicating the usage of the plurality of electronic devices when the display apparatus 100 was turned-off.

According to the request of the display apparatus 100, the digital door-lock 10 and the telephone apparatus 40 transmit the use information to the display apparatus 100 (operation S1540-1 and operation S1540-2). The use information of the digital door-lock 10 may be an open time of the digital door-lock 10, and the like. The use information of the telephone apparatus 40 may be an answer and call time, the contact, and the like.

If the use information is received, the display apparatus 100 may determine that the user is absent from the open of the digital door-lock 10. Specifically, the digital door-lock 10 may also provide use information about whether the user goes out or returns home to the display apparatus 100.

In addition, when the display apparatus 100 receives the use information indicating that the user returns home, the display apparatus 100 determines the use information received from the telephone apparatus 40 as the absence information. Accordingly, the display apparatus 100 displays a UI screen including the absence information of the telephone apparatus 40 (operation S1550). However, the exemplary embodiment is not limited thereto, but in a case in which the display apparatus 100 is not turned-on within the preset time after the digital door-lock 10 is opened, the display apparatus 100 may not display the UI screen. That is, only in the case in which the display apparatus 100 is turned-on within the preset time after the digital door-lock 10 is opened, the display apparatus 100 determines that the user does not immediately check the telephone apparatus 40 and may also display the UI screen including the absence information of the telephone apparatus 40.

According to various exemplary embodiments of the exemplary embodiment as described above, the display apparatus 100 may provide various UI screens to the user according to the use pattern information generated based on the use information related to the plurality of electronic devices, thereby making it possible to improve convenience of the user.

The methods according to the various exemplary embodiments described above may be programmed and stored in a variety of storage mediums. Accordingly, the methods according to various exemplary embodiments described above may be implemented in various types of electronic devices executing the storage medium.

Specifically, according to an exemplary embodiment, a non-transitory computer readable medium having a program stored thereon may be provided, the program sequentially executes an operation of performing communications with a plurality of electronic devices to receive use information of each of the plurality of electronic devices, an operation of classifying and storing use pattern information generated according to the use information for each of a plurality of time sections, an operation of detecting the use pattern information of a time section corresponding to an event when an arbitrary event occurs, and an operation of configuring and displaying a variable UI screen according to contents of the use pattern information.

The non-transitory computer readable medium may be a medium storing data for a short period such as a register, a cache, a memory, or the like, and that may be used in combination with a machine-readable medium semi-permanently storing the data. Further, various applications or programs described above may be stored and provided in the non-transitory computer readable medium such as a compact disc (CD), a digital versatile disk (DVD), a hard disk, a Blu-ray disk, a universal serial bus (USB), a memory card, a read-only memory (ROM), or the like.

Hereinabove, although the exemplary embodiments have been shown and described, it should be understood that the exemplary embodiments are not limited to the disclosed exemplary embodiments and may be variously changed without departing from the scope of the invention as defined by the claims. Therefore, the exemplary embodiments should be construed as including all the changes, equivalents, and substitutions included in the scope of the invention as defined by the claims.

## Claims

1. A display apparatus (100) comprising:
a display unit (110);
a communicating unit (120) configured to perform communication with a plurality of electronic devices (10,20,30,40) so as to receive use information of each of the plurality of electronic devices (10,20,30,40);
a storing unit (130) configured to store use pattern information generated according to the use information for each of a plurality of time sections; and
a controlling unit (140) arranged to determine the use pattern information of a time section corresponding to an arbitrary event and to configure a user interface UI screen according to the use pattern information for display on the display unit (110),
**characterized in that** the controlling unit (140) displays the user interface UI screen including information related to an electronic device corresponding to the use pattern information.

2. The display apparatus as claimed in claim 1, wherein when the use information is transmitted multiple times over a preset number of times during a specific time section from the same electronic device, the controlling unit generates the use pattern information of the electronic device based on the use information which is transmitted multiple times.

3. The display apparatus as claimed in claim 1 or 2, wherein the plurality of electronic devices include a digital door-lock (10) and a home appliance (20),
the use pattern information is information in which a pattern in which the home appliance is used within a first time which is preset from an open time of the digital door-lock is recorded, and
when an event in which the home appliance is used within the first time after the digital door-lock is opened occurs, the controlling unit displays the UI screen including content related to the home appliance on the display unit.

4. The display apparatus as claimed in claim 3, wherein if the home appliance is a refrigerator,
when the refrigerator is opened within the first time after the digital door-lock is opened and a use fact for a specific zone of the refrigerator is sensed, the controlling unit displays product related content for a product disposed in the zone.

5. The display apparatus as claimed in any one of the preceding claims, wherein the plurality of electronic devices include a telephone apparatus (40),
the use pattern information is information in which a history in which the telephone apparatus calls the same contact over a preset number of times during a specific time section is recorded, and
when the specific time section arrives, the controlling unit displays an UI screen including the contact on the display unit.

6. The display apparatus as claimed in any one of the preceding claims, wherein the plurality of electronic devices include a digital door-lock and a telephone apparatus,
the use pattern information is information in which a pattern in which the display apparatus is turned on within a first time which is preset from an open time of the digital door-lock is recorded, and
when an event in which the display apparatus is turned-on within the first time which is preset after the digital door-lock is opened occurs, the controlling unit displays the UI screen including absence information of the telephone apparatus.

7. The display apparatus as claimed in any one of the preceding claims, wherein the controlling unit requests new use information to the plurality of electronic devices and receives the new use information so as to be stored in the storing unit, whenever the display apparatus is turned on.

8. The display apparatus as claimed in any one of the preceding claims, wherein when new use information is received from the plurality of electronic devices, the controlling unit matches meta-data of content displayed on the display unit and the new use information so as to be stored in the storing unit.

9. A method of providing a user interface UI for a display apparatus (100), the method comprising:
performing communication with a plurality of electronic devices (10,20,30,40) so as to receive use information of each of the plurality of electronic devices (10,20,30,40);
storing use pattern information generated according to the use information for each of a plurality of time sections;
when an arbitrary event occurs, detecting the use pattern information of a time section corresponding to the arbitrary event; and
configuring and displaying a UI screen according to the use pattern information,
**characterized in that** the displaying comprises displaying the UI screen including information related to an electronic device corresponding to the use pattern information.

10. The method as claimed in claim 9, further comprising, when the use information is transmitted multiple times over a preset number of times during a specific time section from the same electronic device of the plurality of electronic device, generating the use pattern information of the electronic device based on the use information which is transmitted multiple times.

11. The method as claimed in claim 9 or 10, wherein the plurality of electronic devices include a digital door-lock (10) and a home appliance (20),
the use pattern information is information in which a pattern in which the home appliance is used within a first time which is preset from an open time of the digital door-lock is recorded, and
in the configuring and displaying of the UI screen, when an event in which the home appliance is used within the first time after the digital door-lock is opened occurs, the UI screen including content related to the home appliance is displayed.

12. The method as claimed in claim 11, wherein if the home appliance is a refrigerator, in the configuring and displaying of the UI screen,
when the refrigerator is opened within the first time after the digital door-lock is opened and a use fact for a specific zone of the refrigerator is sensed, product related content for a product disposed in the zone are displayed.

13. The method as claimed in any one of claims 9 to 12, wherein the plurality of electronic devices include a telephone apparatus (40),
the use pattern information is information in which a history in which the telephone apparatus calls the same contact over a preset number of times during a specific time section is recorded, and
in the configuring and displaying of the UI screen,
when the specific time section arrives, a UI screen including the contact is displayed.

14. The method as claimed in any one of claims 9 to 13, wherein the plurality of electronic devices include a digital door-lock (10) and a telephone apparatus (40),
the use pattern information is information in which a pattern in which the display apparatus is turned on within a first time which is preset from an open time of the digital door-lock is recorded, and
in the configuring and displaying of the UI screen,
when an event in which the display apparatus is turned on within the first time which is preset after the digital door-lock is opened occurs, the UI screen including absence information of the telephone apparatus is displayed.

15. The method as claimed in any one of claims 9 to 14, wherein in the storing of the use pattern information, whenever the display apparatus is turned on, new use information is requested to the plurality of electronic devices and the new use information is received and stored.

## Patentansprüche

1. Anzeigevorrichtung (100), die Folgendes umfasst:
eine Anzeigeeinheit (110);
eine Kommunikationseinheit (120), die dazu konfiguriert ist, Kommunikation mit einer Vielzahl von Elektronikgeräten (10,20,30,40) auszuführen, um Nutzungsinformationen von jedem der Vielzahl von Elektronikgeräten (10,20,30,40) zu empfangen;
eine Speichereinheit (130), die dazu konfiguriert ist, Nutzungsmusterinformationen zu speichern, die gemäß den Nutzungsinformationen für jeden einer Vielzahl von Zeitabschnitten erzeugt werden; und
eine Steuereinheit (140), die dazu angeordnet ist, die Nutzungsmusterinformationen eines einem willkürlichen Ereignis entsprechenden Zeitabschnitts zu bestimmen und einen Benutzeroberflächen(UI)-Bildschirm gemäß den Nutzungsmusterinformationen zur Anzeige auf der Anzeigeeinheit (110) zu konfigurieren,
**dadurch gekennzeichnet, dass** die Steuereinheit (140) den Benutzeroberflächen(UI)-Bildschirm mit ein den Nutzungsmusterinformationen entsprechendes Elektronikgerät betreffenden Informationen anzeigt.

2. Anzeigevorrichtung nach Anspruch 1, wobei, wenn die Nutzungsinformationen mehrmals über eine voreingestellte Zahl Male während eines bestimmten Zeitabschnitts von demselben Elektronikgerät aus übertragen werden, die Steuereinheit die Nutzungsmusterinformationen des Elektronikgeräts basierend auf den Nutzungsinformationen, die mehrmals übertragen werden, erzeugt.

3. Anzeigevorrichtung nach Anspruch 1 oder 2, wobei die Vielzahl von Elektronikgeräten ein digitales Türschloss (10) und ein Haushaltsgerät (20) umfasst,
wobei es sich bei den Nutzungsmusterinformationen um Informationen handelt, in denen ein Muster aufgezeichnet ist, in dem das Haushaltsgerät innerhalb einer ersten Zeit, die voreingestellt ist, ab einer Öffnungszeit des digitalen Türschlosses genutzt wird, und
wenn ein Ereignis eintritt, in dem das Haushaltsgerät innerhalb der ersten Zeit, nachdem das digitale Türschloss geöffnet wird, genutzt wird, die Steuereinheit den UI-Bildschirm mit das Haushaltsgerät betreffendem Inhalt auf der Anzeigeeinheit anzeigt.

4. Anzeigevorrichtung nach Anspruch 3, wobei, falls es sich bei dem Haushaltsgerät um einen Kühlschrank handelt,
wenn der Kühlschrank innerhalb der ersten Zeit, nachdem das digitale Türschloss geöffnet wird, geöffnet wird und eine Nutzungstatsache für eine bestimmte Zone des Kühlschranks erkannt wird, die Steuereinheit produktbezogenen Inhalt für ein in der Zone angeordnetes Produkt anzeigt.

5. Anzeigevorrichtung nach einem der vorangehenden Ansprüche, wobei die Vielzahl von Elektronikgeräten einen Telefonapparat (40) umfasst,
wobei es sich bei den Nutzungsmusterinformationen um Informationen handelt, in denen eine Historie aufgezeichnet ist, in der der Telefonapparat denselben Kontakt über eine voreingestellte Anzahl Male während eines bestimmten Zeitabschnitts anruft, und
wenn der bestimmte Zeitabschnitt eintritt, die Steuereinheit einen UI-Bildschirm mit dem Kontakt auf der Anzeigeeinheit anzeigt.

6. Anzeigevorrichtung nach einem der vorangehenden Ansprüche, wobei die Vielzahl von Elektronikgeräten ein digitales Türschloss und einen Telefonapparat umfasst,
wobei es sich bei den Nutzungsmusterinformationen um Informationen handelt, in denen ein Muster aufgezeichnet ist, in dem die Anzeigevorrichtung innerhalb einer ersten Zeit, die voreingestellt ist, ab einer Öffnungszeit des digitalen Türschlosses, eingeschaltet ist, und
wobei, wenn ein Ereignis eintritt, in dem die Anzeigevorrichtung innerhalb der ersten Zeit, die voreingestellt ist, nachdem das digitale Türschloss geöffnet wird, eingeschaltet wird, die Steuereinheit den UI-Bildschirm mit Abwesenheitsinformationen des Telefonapparats anzeigt.

7. Anzeigevorrichtung nach einem der vorangehenden Ansprüche, wobei die Steuereinheit, wann immer die Anzeigevorrichtung eingeschaltet ist, neue Nutzungsinformationen zu der Vielzahl von Elektronikgeräten anfordert und die neuen Nutzungsinformationen empfängt, um in der Speichereinheit gespeichert zu werden.

8. Anzeigevorrichtung nach einem der vorangehenden Ansprüche, wobei, wenn neue Nutzungsinformationen von der Vielzahl von Elektronikgeräten empfangen werden, die Steuereinheit Metadaten von auf der Anzeigeeinheit angezeigtem Inhalt und die neuen Nutzungsinformationen einander zuordnet, um in der Speichereinheit gespeichert zu werden.

9. Verfahren zum Bereitstellen einer Benutzeroberfläche, UI, für eine Anzeigevorrichtung (100), wobei das Verfahren Folgendes umfasst:
Ausführen von Kommunikation mit einer Vielzahl von Elektronikgeräten (10,20,30,40), um Nutzungsinformationen von jedem der Vielzahl von Elektronikgeräten (10,20,30,40) zu empfangen;
Speichern von Nutzungsmusterinformationen, die gemäß den Nutzungsinformationen für jeden einer Vielzahl von Zeitabschnitten erzeugt werden;
wenn ein willkürliches Ereignis eintritt, Erkennen der Nutzungsmusterinformationen eines dem willkürlichen Ereignis entsprechenden Zeitabschnitts; und
Konfigurieren und Anzeigen eines UI-Bildschirms gemäß den Nutzungsmusterinformationen, **dadurch gekennzeichnet, dass** das Anzeigen das Anzeigen des UI-Bildschirms mit ein den Nutzungsmusterinformationen entsprechendes Elektronikgerät betreffenden Informationen umfasst.

10. Verfahren nach Anspruch 9, weiter umfassend, wenn die Nutzungsinformationen mehrmals über eine voreingestellte Zahl Male während eines bestimmten Zeitabschnitts von demselben Elektronikgerät der Vielzahl von Elektronikgeräten aus übertragen werden, Erzeugen der Nutzungsmusterinformationen des Elektronikgeräts basierend auf den Nutzungsinformationen, die mehrmals übertragen werden.

11. Verfahren nach Anspruch 9 oder 10, wobei die Vielzahl von Elektronikgeräten ein digitales Türschloss (10) und ein Haushaltsgerät (20) umfasst,
wobei es sich bei den Nutzungsmusterinformationen um Informationen handelt, in denen ein Muster aufgezeichnet ist, in dem das Haushaltsgerät innerhalb einer ersten Zeit, die voreingestellt ist, ab einer Öffnungszeit des digitalen Türschlosses genutzt wird, und
wenn beim Konfigurieren und Anzeigen des UI-Bildschirms ein Ereignis eintritt, in dem das Haushaltsgerät innerhalb der ersten Zeit, nachdem das digitale Türschloss geöffnet wird, genutzt wird, der UI-Bildschirm mit das Haushaltsgerät betreffendem Inhalt angezeigt wird.

12. Verfahren nach Anspruch 11, wobei, falls es sich bei dem Haushaltsgerät um einen Kühlschrank handelt, beim Konfigurierten und Anzeigen des UI-Bildschirms,
wenn der Kühlschrank innerhalb der ersten Zeit, nachdem das digitale Türschloss geöffnet wird, geöffnet wird und eine Nutzungstatsache für eine bestimmte Zone des Kühlschranks erkannt wird, produktbezogener Inhalt für ein in der Zone angeordnetes Produkt angezeigt wird.

13. Verfahren nach einem der Ansprüche 9 bis 12, wobei die Vielzahl von Elektronikgeräten einen Telefonapparat (40) umfasst,
wobei es sich bei den Nutzungsmusterinformationen um Informationen handelt, in denen eine Historie aufgezeichnet ist, in der der Telefonapparat denselben Kontakt über eine voreingestellte Anzahl Male während eines bestimmten Zeitabschnitts anruft, und
beim Konfigurieren und Anzeigen des UI-Bildschirms,
wenn der bestimmte Zeitabschnitt eintritt, ein UI-Bildschirm mit dem Kontakt angezeigt wird.

14. Verfahren nach einem der Ansprüche 9 bis 13, wobei die Vielzahl von Elektronikgeräten ein digitales Türschloss (10) und einen Telefonapparat (40) umfasst,
wobei es sich bei den Nutzungsmusterinformationen um Informationen handelt, in denen ein Muster aufgezeichnet ist, in dem die Anzeigevorrichtung innerhalb einer ersten Zeit, die voreingestellt ist, ab einer Öffnungszeit des digitalen Türschlosses, eingeschaltet ist, und
beim Konfigurieren und Anzeigen des UI-Bildschirms,
wenn ein Ereignis eintritt, in dem die Anzeigevorrichtung innerhalb der ersten Zeit, die voreingestellt ist, nachdem das digitale Türschloss geöffnet wird, eingeschaltet wird, der UI-Bildschirm mit Abwesenheitsinformationen des Telefonapparats angezeigt wird.

15. Verfahren nach einem der Ansprüche 9 bis 14, wobei beim Speichern der Nutzungsmusterinformationen, wann immer die Anzeigevorrichtung eingeschaltet ist, neue Nutzungsinformationen zu der Vielzahl von Elektronikgeräten angefordert werden und die neuen Nutzungsinformationen empfangen und gespeichert werden.

## Revendications

1. Appareil d'affichage (100) comprenant :
une unité d'affichage (110) ;
une unité de communication (120) configurée pour établir une communication avec une pluralité de dispositifs électroniques (10, 20, 30, 40) afin de recevoir des informations d'utilisation de chaque dispositif de la pluralité de dispositifs électroniques (10, 20, 30, 40) ;
une unité de stockage (130) configurée pour stocker des informations de profil d'utilisation générées en fonction des informations d'utilisation pour chaque tranche d'une pluralité de tranches horaires ; et
une unité de contrôle (140) adaptée pour déterminer les informations de profil d'utilisation d'une tranche horaire correspondant à un événement arbitraire et pour configurer un écran d'interface utilisateur UI en fonction des informations de profil d'utilisation pour l'afficher sur l'unité d'affichage (110),
**caractérisé en ce que**
l'unité de contrôle (140) affiche l'écran d'interface utilisateur UI comprenant des informations relatives à un dispositif électronique qui correspond aux informations de profil d'utilisation.

2. Appareil d'affichage selon la revendication 1, dans lequel, lorsque les informations d'utilisation sont transmises plusieurs fois sur un nombre prédéterminé de fois pendant une tranche horaire spécifique à partir du même dispositif électronique, l'unité de contrôle génère les informations de profil d'utilisation du dispositif électronique sur la base des informations d'utilisation qui sont transmises plusieurs fois.

3. Appareil d'affichage selon la revendication 1 ou la revendication 2, dans lequel la pluralité de dispositifs électroniques comprend une serrure digitale (10) et un appareil ménager (20),
les informations de profil d'utilisation sont des informations dans lesquelles est enregistré un profil dans lequel l'appareil ménager est utilisé à l'intérieur d'un premier temps prédéfini à partir d'un temps d'ouverture de la serrure digitale, et
lorsqu'il se produit un événement dans lequel l'appareil ménager est utilisé à l'intérieur du premier temps après l'ouverture de la serrure digitale, l'unité de contrôle affiche l'écran UI qui comprend un contenu relatif à l'appareil ménager sur l'unité d'affichage.

4. Appareil d'affichage selon la revendication 3, dans lequel, si l'appareil ménager est un réfrigérateur,
lorsque le réfrigérateur est ouvert à l'intérieur du premier temps après l'ouverture de la serrure digitale et qu'un fait d'utilisation d'une zone spécifique du réfrigérateur est détecté, l'unité de contrôle affiche un contenu relatif au produit pour un produit disposé dans ladite zone.

5. Appareil d'affichage selon l'une quelconque des revendications précédentes, dans lequel la pluralité de dispositifs électroniques comprend un appareil téléphonique (40),
les informations de profil d'utilisation sont des informations dans lesquelles est enregistré un historique dans lequel l'appareil téléphonique appelle le même contact un nombre prédéterminé de fois pendant une tranche horaire spécifique, et
lorsque la tranche horaire spécifique arrive, l'unité de contrôle affiche un écran UI qui comprend le contact sur l'unité d'affichage.

6. Appareil d'affichage selon l'une quelconque des revendications précédentes, dans lequel la pluralité de dispositifs électroniques comprend une serrure digitale et un appareil téléphonique,
les informations de profil d'utilisation sont des informations dans lesquelles est enregistré un profil dans lequel l'appareil d'affichage est activé à l'intérieur d'un premier temps prédéfini à partir d'un temps d'ouverture de la serrure digitale, et
lorsqu'il se produit un événement dans lequel l'appareil d'affichage est activé à l'intérieur du premier temps prédéfini après l'ouverture de la serrure digitale, l'unité de contrôle affiche l'écran UI comprenant une information d'absence de l'appareil téléphonique.

7. Appareil d'affichage selon l'une quelconque des revendications précédentes, dans lequel l'unité de contrôle demande de nouvelles informations d'utilisation à la pluralité de dispositifs électroniques et reçoit lesdites nouvelles informations d'utilisation afin de les stocker dans l'unité de stockage chaque fois que l'appareil d'affichage est activé.

8. Appareil d'affichage selon l'une quelconque des revendications précédentes, dans lequel, lorsque de nouvelles informations d'utilisation sont reçues de la pluralité de dispositifs électroniques, l'unité de contrôle associe les métadonnées de contenu affichées sur l'unité d'affichage et les nouvelles informations d'utilisation afin de les stocker dans l'unité de stockage.

9. Procédé de fourniture d'une interface utilisateur UI pour un appareil d'affichage (100), le procédé comprenant :
l'établissement d'une communication avec une pluralité de dispositifs électroniques (10, 20, 30, 40) afin de recevoir des informations d'utilisation de chaque dispositif de la pluralité de dispositifs électroniques (10, 20, 30, 40) ;
le stockage d'informations de profil d'utilisation générées en fonction des informations d'utilisation pour chaque tranche d'une pluralité de tranches horaires ;
lorsqu'un événement arbitraire se produit, la détection des informations de profil d'utilisation d'une tranche horaire correspondant audit événement arbitraire ; et
la configuration et l'affichage d'un écran UI en fonction des informations de profil d'utilisation,
**caractérisé en ce que**
l'affichage comprend l'affichage de l'écran UI comprenant des informations relatives à un dispositif électronique qui correspond aux informations de profil d'utilisation.

10. Procédé selon la revendication 9, comprenant en outre, lorsque les informations d'utilisation sont transmises plusieurs fois sur un nombre prédéterminé de fois pendant une tranche horaire spécifique à partir du même dispositif électronique de la pluralité de dispositifs électroniques, la génération des informations de profil d'utilisation du dispositif électronique sur la base des informations d'utilisation qui sont transmises plusieurs fois.

11. Procédé selon la revendication 9 ou la revendication 10, dans lequel la pluralité de dispositifs électroniques comprend une serrure digitale (10) et un appareil ménager (20),
les informations de profil d'utilisation sont des informations dans lesquelles est enregistré un profil dans lequel l'appareil ménager est utilisé à l'intérieur d'un premier temps prédéfini à partir d'un temps d'ouverture de la serrure digitale, et
dans la configuration et l'affichage de l'écran UI, lorsqu'il se produit un événement dans lequel l'appareil ménager est utilisé à l'intérieur du premier temps après l'ouverture de la serrure digitale, l'écran UI comprenant un contenu relatif à l'appareil ménager est affiché.

12. Procédé selon la revendication 11, dans lequel, si l'appareil ménager est un réfrigérateur, dans la configuration et l'affichage de l'écran UI,
lorsque le réfrigérateur est ouvert après le premier temps après l'ouverture de la serrure digitale et qu'un fait d'utilisation d'une zone spécifique du réfrigérateur est détecté, un contenu relatif au produit est affiché pour un produit disposé dans ladite zone.

13. Procédé selon l'une quelconque des revendications 9 à 12, dans lequel la pluralité de dispositifs électroniques comprend un appareil téléphonique (40),
les informations de profil d'utilisation sont des informations dans lesquelles est enregistré un historique dans lequel l'appareil téléphonique appelle le même contact un nombre prédéterminé de fois pendant une tranche horaire spécifique, et
dans la configuration et l'affichage de l'écran UI,
lorsque la tranche horaire spécifique arrive, un écran UI comprenant le contact est affiché.

14. Procédé selon l'une quelconque des revendications 9 à 13, dans lequel la pluralité de dispositifs électroniques comprend une serrure digitale (10) et un appareil téléphonique (40),
les informations de profil d'utilisation sont des informations dans lesquelles est enregistré un profil dans lequel l'appareil d'affichage est activé à l'intérieur d'un premier temps prédéfini à partir d'un temps d'ouverture de la serrure digitale, et
dans la configuration et affichage de l'écran UI,
lorsqu'il se produit un événement dans lequel l'appareil d'affichage est activé à l'intérieur du premier temps prédéfini après l'ouverture de la serrure digitale, l'écran UI comprenant une information d'absence de l'appareil téléphonique est affiché.

15. Procédé selon l'une quelconque des revendications 9 à 14, dans lequel, dans le stockage des informations de profil d'utilisation, chaque fois que l'appareil d'affichage est activé, de nouvelles informations d'utilisation sont demandées à la pluralité de dispositifs électroniques et lesdites nouvelles informations d'utilisation sont reçues et stockées.
